(19) Europäisches Patentamt
European Patent Office
Office européen des brevets

(11) **EP 2 053 682 A1**

(12) **EUROPEAN PATENT APPLICATION**
published in accordance with Art. 153(4) EPC

(43) Date of publication:
**29.04.2009 Bulletin 2009/18**

(21) Application number: **07792555.0**

(22) Date of filing: **09.08.2007**

(51) Int Cl.:
*H01M 8/04* (2006.01)   *C21D 6/00* (2006.01)
*C22C 38/00* (2006.01)   *H01M 8/10* (2006.01)

(86) International application number:
**PCT/JP2007/065921**

(87) International publication number:
**WO 2008/020601 (21.02.2008 Gazette 2008/08)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **14.08.2006 JP 2006220953**

(71) Applicant: **Toyo Seikan Kaisha, Ltd.**
**Tokyo 100-8522 (JP)**

(72) Inventors:
• **KINOUCHI, Kouki**
  **Yokohama-shi**
  **Kanagawa 230-0001 (JP)**
• **KUROKAWA, Wataru**
  **Yokohama-shi**
  **Kanagawa 230-0001 (JP)**

• **SHINTANI, Shouzou**
  **Yokohama-shi**
  **Kanagawa 230-0001 (JP)**
• **IMODA, Daisuke**
  **Yokohama-shi**
  **Kanagawa 230-0001 (JP)**
• **YOSHIHIRO, Kenji**
  **Yokohama-shi**
  **Kanagawa 230-0001 (JP)**
• **YAMAMORI, You**
  **Yokohama-shi**
  **Kanagawa 230-0001 (JP)**

(74) Representative: **Manley, Nicholas Michael et al**
**W.P. Thompson & Co.**
**Coopers Building**
**Church Street**
**Liverpool L1 3AB (GB)**

(54) **COIL SPRING FOR FUEL CELL**

(57)   A coil spring for fuel cells, used for a fuel cell or a cartridge for the fuel cell, comprising an austenite type stainless steel without any nickel layer formed on the surface thereof, and having a cationic index I of not more than 60 as expressed by the following formula (1),

$$I = A + 2B + 3C \qquad --- (1)$$

wherein A, B and C represent, respectively, a concentration (ppb) of monovalent metal ions, a concentration (ppb) of metal ions which are neither monovalent nor trivalent, and a concentration (ppb) of trivalent metal ions per the coil spring in a methanol solution of when the coil spring is dipped in the methanol solution (containing 1% of water + 4000 ppm of formic acid) and preserved therein at 60°C for one week. Even when brought into contact with the content solution exhibiting acidity of the fuel cell, the coil spring reliably suppresses the elution of metal ions thereof.

**(Cont. next page)**

# Fig. 1

**Description**

Technical Field:

The present invention relates to a coil spring for a fuel cell, that is used for a fuel cell or for a cartridge for the fuel cell. More specifically, the invention relates to a coil spring for fuel cell, which effectively suppresses the elution of metal ions thereof in an acidic content solution in the fuel cells or in the cartridge for the fuel cell.

Background Art:

It has been known that a direct methanol type fuel cell (DMFC) is suited for realizing equipment in a small size since it is capable of creating an electrochemical reaction by directly feeding methanol which is a fuel to the anode (fuel electrode) without using reformer for taking out hydrogen. Therefore, the direct methanol type fuel cell is drawing attention for use, particularly, with portable devices. Concerning such small fuel cells, use of metal members has been proposed in an attempt to decrease the size of the cartridge and to make it possible to use under high-temperature conditions.
On the other hand, the direct methanol type fuel cell is of the nature in which methanol which is the fuel is directly fed to the anode to create the electrochemical reaction which, however, is impaired by metal ions present in the fuel methanol resulting in a decrease in the electromotive force and in a decrease in the generation capability. When treating the fuel such as methanol that is oxidized at the time of generating electricity and turns into an acidic oxide or treating the fuel cell using the fuel that tends to exhibit acidity, therefore, it is important that the metal member that comes in contact with the fuel does not elute out metal ions thereof.
A main fuel tank of the fuel cell and the cartridge for the fuel cell have valves disposed in a fuel path, and the path is permitted to be communicated only when they are connected together. A metal spring is preferably used to operate the above valves under various conditions of use maintaining stability. In producing the springs, however, it is so far a practice to plate a wire member with nickel to improve lubricating property at the time of stretch working the wire. When a coil spring with its surface plated with nickel is used for the fuel cells, however, nickel ions elute out to deteriorate the generation capability. Therefore, use of the coil spring involves difficulty.
On the other hand, JP-A-9-85332 proposes a stainless steel wire for a spring without being plated with nickel, obtained by nitrating the surfaces of an austenite type stainless steel to form a film of a thickness of 0.1 to 50 $\mu$m by a molten salt method followed by stretching working.
To prevent elution of metal ions from the metal members used for the fuel cells, further, attempts have been made to treat the metal surfaces to become passive as well as to plate the surfaces with gold as disclosed in JP-A-2002-42827 and JP-A-2000-345363.

Disclosure of the Invention

However, none of the coil springs of the above-mentioned methods is satisfactory for suppressing the elution when used as coil springs that come in contact with the fuel such as methanol in the fuel cells or in the cartridge for the fuel cells. Gold plating and titanium may be satisfactory from the standpoint of suppressing the elution but are too expensive for use as general-purpose members, and are not advantageous in economy. Therefore, it has been desired to provide a coil spring which reliably suppresses the elution of metal ions and is also advantageous in economy.
It is therefore an object of the present invention to provide a coil spring for a fuel cell or for a cartridge for the fuel cell, which reliably suppresses the elution of metal ions even when it comes in contact with the content solution that exhibits acidity in the fuel cell.
According to the present invention, there is provided a coil spring for a fuel cell, used for a fuel cell or a cartridge for the fuel cell, comprising an austenite type stainless steel without any nickel layer formed on the surface thereof, and having a cationic index I of not more than 60 as expressed by the following formula (1),

$$I = A + 2B + 3C \qquad \text{--- (1)}$$

wherein A, B and C represent, respectively, a concentration (ppb) of monovalent metal ions, a concentration (ppb) of metal ions which are neither monovalent nor trivalent, and a concentration (ppb) of trivalent metal ions per the coil spring in a methanol solution of when the coil spring is dipped in the methanol solution (containing 1% of water + 4000 ppm of formic acid) and preserved therein at 60°C for one week.
In the coil spring for the fuel cell of the present invention, it is desired that:

1. The coil spring has short-pitch portions and a long-pitch portion, a wire spacing in the short-pitch portions being larger than 1 $\mu$m but smaller than the wire diameter of the coil spring, and the length of the short-pitch portions being greater than the wire spacing of the long-pitch portion;
2. The coil spring has a chromium oxide film formed on the surface thereof; and
3. The coil spring is subjected to the tempering in a salt bath.

The coil spring for a fuel cell of the invention used for a fuel cell or for a cartridge for the fuel cell, comprises an austenite type stainless steel, and is formed as a coil spring without plated on the surface thereof with nickel layer unlike the ordinary coil springs.

In forming the coil springs, in general, the wire member is plated with nickel to improve lubricating property at the time of stretching the wire. The present invention, however, prevents the elution of nickel ions without effecting the nickel plating.

The austenite type stainless steel used in the present invention has a low magnetic permeability and exhibits excellent low-elution property by itself. At the time of stretching the wire for forming a coil spring and subjecting the wire to the coiling working, however, martensite may be induced to spoil the low-elution property. According to the present invention, however, even in case the martensite is induced, the tempering that will be described later works to decrease the martensite that is induced through the working, making it possible to maintain excellent low-elution property inherent in the austenite type stainless steel.

For this purpose, therefore, the coil spring for the fuel cell of the invention has a cationic index I represented by the above formula (1) of not larger than 60 and, particularly, not larger than 6, has excellent low-elution property, and effectively prevents the generating capability of the fuel cell from being impaired.

If metal ions elute out into the fuel from the coil spring, hydrogen ions used for the reaction on the cathode are impaired from migrating onto the cathode. Upon measuring the amount of hydrogen ions decreased due to metal ions eluted from the coil spring as the cationic index expressed by the above formula (1), therefore, it is allowed to know the effect of the coil spring upon the generation capability of the fuel cell.

The cationic index which is small means that the metal ions are eluted out in small amounts and little affects the generation performance of the fuel cell. According to the present invention, the coil spring having a cationic index smaller than a predetermined value suppresses the elution thereof to a satisfactory level and can be preferably used for the fuel cell or for the cartridge for the fuel cell.

The cationic index I is measured by dipping the stainless steel member in 25 ml of a methanol solution (containing 1% of water + 4000 ppm of formic acid) and preserving it therein at 60°C for one week; i.e., the concentration of metal ions in the methanol solution is measured and is calculated as a value per a coil spring. Formic acid is contained in the solution. This is because formic acid forms due to the side reaction of methanol in the fuel cell and may flow back to the portion where the coil spring is used. Formation of formic acid accelerates the elution of metal ions from the coil spring. In the above formula (1), monovalent metal ions A are $Li^+$, $Na^+$ and $K^+$, metal ions which are neither monovalent nor trivalent are, concretely, divalent or tetravalent metal ions B, such as $Mg^{2+}$, $Ca^{2+}$, $Ti^{2+}$, $Mn^{2+}$, $Fe^{2+}$, $Co^{2+}$, $Ni^{2+}$, $Cu^{2+}$, $Zn^{2+}$, $Ge^{4+}$, $Mo^{4+}$ and $Pb^{2+}$, and trivalent metal ions C are $Al^{3+}$, $Cr^{3+}$ and $Sb^{3+}$.

Further, the coil spring of the present invention forms end turns to more reliably prevent the sticking. Besides, gaps are formed in the end turns for improved washing.

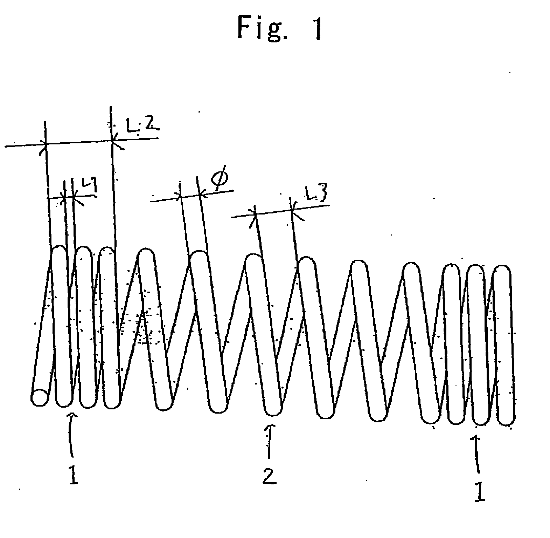

A coil spring of the invention shown in Fig. 1 includes short-pitch portions 1 which are the end turns forming gaps, and a long-pitch portion 2 other than the end turns. Here, it is particularly desired that the wire spacing L1 in the short-pitch portions 1 is not smaller than 1 $\mu$m but is smaller than the wire diameter $\phi$ of the coil spring, and the length L2 of the short-pitch portions is larger than the wire spacing L3 in the long-pitch portion 2, i.e.,

$$1 \ \mu\mathrm{m} < \mathrm{L1} < \phi \ \text{ and } \ \mathrm{L3} < \mathrm{L2}$$

Namely, improved washing is attained without spoiling the prevention of sticking based on the end turns.

The coil spring of the invention has an excellently low-eluting property exhibiting a cationic index I of not larger than 60 even when it is used for a fuel cell or for a cartridge for the fuel cell that use acidic fuel like a methanol solution of the invention. Therefore, the coil spring of the invention does not impair the generating capability of fuel cell.

Further, upon forming the end turns with a predetermined gap, the coil spring of the invention can be efficiently washed yet preventing the sticking.

The coil spring of the present invention can be particularly preferably used for a valve in a portion where the fuel cell is connected to the cartridge for the fuel cell.

Brief Description of the Drawings

Fig. 1 is a side view of a coil spring for a fuel cell of the present invention.

Best Mode for Carrying Out the Invention

(Production Method)

The coil spring for the fuel cell of the invention having the above-mentioned properties can be preferably produced through (1) the production steps comprising the steps of stretching the wire, coiling the wire, washing in an alkali with ultrasonic waves, washing with water, tempering, washing with water, passivation treatment, washing with water and washing in pure water with ultrasonic waves, or (2) the production steps comprising the steps of stretching the wire, coiling the wire, washing in an alkali with ultrasonic waves, washing with water, tempering, washing with water and washing in pure water with ultrasonic waves.

[Wire Member]

The coil spring for the fuel cell of the invention uses a wire member made of an austenite type stainless steel. As the austenite type stainless steel, there is preferably used the one having a magnetic permeability in a range of 1.000 to 2.500.

[Step of Stretching Working/Coiling Working]

The wire member comprising the austenite type stainless steel is, first, stretched so as to possess a required wire diameter. In the conventional step of producing the coil springs, there is used a wire member plated with nickel which works as a lubricating agent. The present invention, however, uses a wire member which has not been plated with nickel from the standpoint of low-elution property. In the method of producing the coil spring of the present invention, therefore, it is desired to use an antifriction composition. There may be used a widely known antifriction composition. According to the present invention, however, there can be particularly preferably used calcium stearate or sodium stearate.

Next, the wire member is subjected to the conventional coiling working so as to be formed in the shape of a coil spring.

[Washing in an Alkali with Ultrasonic Waves/Washing with Water]

Next, the wire member is washed in an alkali with ultrasonic waves in order to remove the antifriction composition used at the time of stretching the wire. The washing in an alkali with ultrasonic waves is conducted by dipping the coil spring in an alkaline solution and applying ultrasonic vibration. Though there is no particular limitation, the alkaline solution has a pH preferably in a range of 8 to 13. Further, though there is no particular limitation, the alkaline solution is maintained at a temperature preferably in a range of 30 to 70°C.

Next, the wire member is washed with water to remove the alkaline solution adhered to the spring coil in the step of washing in the alkali with ultrasonic waves. Water used in this case may be well water.

[Tempering]

The coil spring washed with water for removing the alkali is, thereafter, subjected to the tempering. Usually, the tempering is a step essential for producing the coil spring and works to remove residual stress caused by stretching the wire and coiling, and is executed for stabilizing the shape of the coil spring. The tempering employed by the present invention further exhibits the action and effect of rendering the stainless steel member itself to exhibit low-elution property by lowering the formation of martensite induced by the working, by lowering the magnetic permeability and by forming an iron oxide film in addition to the action and effect of removing the residual stress in the coil spring caused by the stretching of the wire and coiling and of stabilizing the shape.

As the tempering for exhibiting the above action and effect, there can be exemplified a salt bath tempering. The salt bath has a large heat capacity, and is capable of effecting the heat treatment in a relatively short period of time to achieve the above action and effect, lowering the cationic index I of the coil spring to be not larger than 6 even without effecting the passivation treatment that will be described later, and maintaining excellent low-elution property.

Though not limited thereto only, the salt bath tempering is conducted, preferably, by using a nitrate or a nitrite as a salt bath agent; i.e., the coil spring is dipped in the salt bath heated at 270 to 420°C and is heated for 10 to 30 minutes.

If the desired coil spring is to possess a cationic index in a range of 30 to 60, then the tempering may be effected in an electric furnace. In the tempering in the electric furnace, it is desired that the temperature is in a range of 270 to 420°C, and the treating time is in a range of 10 to 30 minutes.

When the tempering is executed in the electric furnace, too, the passivation treatment can be executed as will be described later to lower the cationic index to a value of smaller than 20.

[Washing with Water]

The tempering is followed by the washing with water. After the tempering in the salt bath, in particular, the rock salt adhered to the coil spring must be removed. Water used in this case may be well water.

[Passivation Treatment]

It is desired that iron which is not forming an oxide film is washed away from the coil spring of the invention, a chromium oxide film is formed thereon to improve the low-elution property of the stainless steel material, and passivation treatment (washing with an acid) is conducted to further decrease the cationic index.

The passivation treatment can be conducted by a known method. The treating conditions, however, cannot be exclusively specified since the amount of removing iron which is not forming an oxide film and the amount of forming the chromium oxide film vary depending upon the kind of the organic acid solution, concentration thereof, temperature and the treating time. When the nitric acid of a concentration of 30% by weight is used, however, it is desired to conduct the treatment at 30 to 50°C for 5 to 30 minutes.

After the passivation treatment, the spring coil is washed with water to remove the acid adhered thereto. Here, as will be described later, the final step is the washing with pure water. Namely, water for removing the acid may be well water.

[Washing in Pure Water with Ultrasonic Waves]

After subjected to the steps of passivation treatment and washing, the spring coil is washed in a state of being dipped in pure water without containing metal ions and applied with ultrasonic vibration. Upon being washed with ultrasonic waves, impurities adhered to the spring coil are removed and purified. There is thus produced a coil spring for a fuel cell or for a cartridge for the fuel cell.

EXAMPLES

(Method of Evaluation)

[Cationic Index]

A coil spring (surface area of 1.64 $cm^2$) was dipped in 25 ml of a methanol solution (containing 1% of water + 4000 ppm of formic acid) and was preserved therein at 60°C for one week. The metal ion concentration in the methanol solution was measured by using an ICP-MS to find the cationic index in compliance with the above-mentioned formula (1).

[Prevention of Sticking]

Coil springs were introduced into a metal container or a glass container having a bottom diameter and a height which are not less than 10 times as large as the free length of the coil spring, the coil springs being stacked to a height of not less than 5 times the free length thereof, and the vibration testing was conducted under the vibration conditions specified under JIS Z 0232 to observe the sticking among the springs.

[Chromium Oxide Film]

Presence of the chromium oxide film was defined as described below. First, chromium, iron and oxygen in the most surface portion of the spring were measured by using the X-ray photoelectron spectroscopic analyzing apparatus (XPS). At this moment, the peak of oxygen was measured, and it was so defined that the chromium oxide film was present when the ratio Cr/Fe of chromium atomic %/iron atomic % was not less than 3.0. In measuring the spring, in general, the spring is held in a compressed state. In this state, the spring is lightly pressed to such a degree that the curvature of the wire member is not deformed to obtain a plain thereof without almost deformed, and the measurement was taken over a diameter of 10 $\mu$m to 100 $\mu$m by using the XPS. It is difficult to take the measurement when the spring has a small wire diameter. It is desired that the wire diameter is as large as possible from the standpoint of measuring sensitivity.

(Example 1)

Calcium stearate was applied onto a wire member made of an austenite type stainless steel having a magnetic permeability of 1.500 and a diameter of 0.6 mm. The wire member was subjected to the stretching working and coiling working to form a coil spring having a free length of 11.7 mm, a wire diameter ($\phi$) of 0. 41 mm, an outer diameter of 3.79 mm, a length (L2) of short-pitch portions of 1.62 mm, a wire spacing (L1) of short-pitch portions of 0.20, a length of a long-pitch portion of 7.87 mm, and a wire spacing (L3) of the long-pitch portion of 0.83 mm. Next, the coil spring was washed with an alkaline treating solution of a pH of 9 and was washed with water. After washed, the coil spring was dipped in a salt bath comprising a nitrate and a nitrite maintained at a temperature of 350°C for 20 minutes to effect the tempering. The coil spring was further washed with water, dipped in pure water, and was washed therein with the application of ultrasonic waves.

(Example 2)

A coil spring was produced in the same manner as in Example 1 but effecting the tempering, washing with water and passivation treatment with nitric acid (concentration of 30% by weight) at 40°C for 10 minutes.

(Example 3)

A coil spring was produced in the same manner as in Example 1 except that the length (L2) of the short-pitch portions was 1.23 mm, and the wire spacing (L1) in the short-pitch portions was 0 mm, i.e., no short-pitch portion was possessed.

(Example 4)

A coil spring was produced in the same manner as in Example 1 but effecting the tempering in an electric furnace heated at 270°C for 10 minutes.

(Example 5)

A coil spring was produced in the same manner as in Example 1 but effecting the tempering in an electric furnace heated at 350°C for 30 minutes.

(Example 6)

A coil spring was produced in the same manner as in Example 1 but effecting the tempering in an electric furnace heated at 420°C for 30 minutes.

(Example 7)

A coil spring was produced in the same manner as in Example 2 but effecting the tempering in an electric furnace heated at 270°C for 10 minutes.

(Example 8)

A coil spring was produced in the same manner as in Example 2 but effecting the tempering in an electric furnace heated at 350°C for 30 minutes.

(Comparative Example 1)

A wire member made of an austenite type stainless steel having a magnetic permeability of 1.500 and a diameter of 0.6 mm was plated with Ni. The wire member was subjected to the stretching working and coiling working to form a coil spring having a free length of 11.7 mm, a wire diameter ($\phi$) of 0.41 mm, an outer diameter of 3.79 mm, a length (L2) of short-pitch portions of 1. 62 mm, a wire spacing (L1) of short-pitch portions of 0.20, a length of a long-pitch portion of 7.87 mm, and a wire spacing (L3) of the long-pitch portion of 0.83 mm. Next, the coil spring was washed with an alkaline treating solution of a pH of 9 and was washed with water. After washed, the coil spring was washed with an alkaline treating solution of a pH of 9 and was, thereafter, washed with water.

After washed, the coil spring was tempered in an electric furnace heated at 270°C for 10 minutes. After further washed with water, the coil spring was dipped in pure water, and was washed therein with the application of ultrasonic waves.

(Comparative Example 2)

A coil spring was produced in the same manner as in Comparative Example 1 but being applied with calcium stearate instead of being plated with Ni.

(Comparative Example 3)

A coil was produced in the same manner as in Comparative Example 2 but without effecting the tempering.

Table 1

|  | Ni plating | Gap in the end turn (short-pitch portion) | Cr oxide film (passivation) | Tempering | Tempering condition | Cationic index (I) |
|---|---|---|---|---|---|---|
| Comp. Ex. 1 | yes | yes | no | electric furnace | 270°C×10min. | >60000 |
| Comp. Ex. 2 | no | yes | no | electric furnace | 270°C×10min. | 99 |
| Comp. Ex. 3 | no | yes | no | no | - | 563 |
| Ex. 1 | no | yes | no | salt bath | 350°C×20min. | 3 |
| Ex. 2 | no | yes | yes | salt bath | 350°C×20min. | 1 |
| Ex. 3 | no | no | no | salt bath | 350°C×20min. | 5 |
| Ex. 4 | no | yes | no | electric furnace | 270°C×30min. | 49 |
| Ex. 5 | no | yes | no | electric furnace | 350°C×30min. | 33 |
| Ex. 6 | no | yes | no | electric furnace | 420°C×30min. | 35 |
| Ex. 7 | no | yes | yes | electric furnace | 270°C×10min. | 60 |
| Ex. 8 | no | yes | yes | electric furnace | 350°C×30min. | 18 |

## Claims

1.  A coil spring for fuel cells, used for a fuel cell or a cartridge for the fuel cell, comprising an austenite type stainless steel without any nickel layer formed on the surface thereof, and having a cationic index I of not more than 60 as expressed by the following formula (1),

$$I = A + 2B + 3C \qquad\qquad --- (1)$$

wherein A, B and C represent, respectively, a concentration (ppb) of monovalent metal ions, a concentration (ppb) of metal ions which are neither monovalent nor trivalent, and a concentration (ppb) of trivalent metal ions per the coil spring in a methanol solution of when the coil spring is dipped in the methanol solution (containing 1% of water + 4000 ppm of formic acid) and preserved therein at 60°C for one week.

2.  The coil spring for a fuel cell according to claim 1,
    wherein the coil spring has short-pitch portions and a long-pitch portion, a wire spacing in the short-pitch portions being larger than 1 μm but smaller than the wire diameter of the coil spring, and the length of the short-pitch portions being greater than the wire spacing of the long-pitch portion.

3.  The coil spring for a fuel cell according to claim 1,
    wherein the coil spring has a chromium oxide film formed on the surface thereof.

4.  The coil spring for a fuel cell according to claim 1,
    wherein the coil spring is subjected to the tempering in a salt bath.

# Fig. 1

## INTERNATIONAL SEARCH REPORT

| International application No. |
| --- |
| PCT/JP2007/065921 |

A. CLASSIFICATION OF SUBJECT MATTER
*H01M8/04*(2006.01)i, *C21D6/00*(2006.01)i, *C22C38/00*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/00-8/24, C22C38/00-38/60, C21D6/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2005/13393 A2 (SOCIETE BIC), 10 February, 2005 (10.02.05), Claims & JP 2007-500829 A & US 2005/22883 A1 | 1-4 |
| A | JP 7-268599 A (Shinko Pantec Co., Ltd.), 17 October, 1995 (17.10.95), Examples (Family: none) | 1-4 |
| A | JP 2003-226940 A (Sumitomo Denko Steel Wire Kabushiki Kaisha), 15 August, 2003 (15.08.03), Full text (Family: none) | 1-4 |

☒ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>05 November, 2007 (05.11.07) | Date of mailing of the international search report<br>20 November, 2007 (20.11.07) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2007/065921

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2004/19437 A1  (Daido Steel Co., Ltd.),<br>04 March, 2004 (04.03.04),<br>Second invention<br>& US 2006/159971 A1    & EP 1557895 A1 | 1-4 |
| A | JP 2006-177492 A  (Toyo Seikan Kaisha, Ltd.),<br>06 July, 2006 (06.07.06),<br>Fig. 1<br>& WO 2006/75517 A1     & EP 1830119 A1 | 1-4 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9085332 A
- JP 2002042827 A
- JP 2000345363 A